(19) **Europäisches Patentamt / European Patent Office / Office européen des brevets**

(11) **EP 3 859 463 B1**

(12) **FASCICULE DE BREVET EUROPEEN**

(45) Date de publication et mention de la délivrance du brevet:
**19.07.2023 Bulletin 2023/29**

(21) Numéro de dépôt: **21154607.2**

(22) Date de dépôt: **01.02.2021**

(51) Classification Internationale des Brevets (IPC):
***G05B 19/4065*** (2006.01)

(52) Classification Coopérative des Brevets (CPC):
**G05B 19/4065;** G05B 2219/50308

(54) **SYSTEME D'ESTIMATION DE L'ÉTAT D'USURE D'UN OUTIL COUPANT PENDANT L'USINAGE**

SYSTEM ZUR ABSCHÄTZUNG DES VERSCHLEISSZUSTANDES EINES SCHNEIDWERKZEUGS WÄHREND DER BEARBEITUNG

SYSTEM FOR ESTIMATING THE STATE OF WEAR OF A CUTTING TOOL DURING MACHINING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.02.2020 FR 2001061**

(43) Date de publication de la demande:
**04.08.2021 Bulletin 2021/31**

(73) Titulaire: **Airbus Operations SAS**
**31060 Toulouse (FR)**

(72) Inventeurs:
- **VERSOLATO, Florian**
  **31060 TOULOUSE (FR)**
- **NOIROT-NERIN, Emeric**
  **31060 TOULOUSE (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A1- 3 001 265      WO-A1-2017/192821**
**US-A1- 2018 150 038      US-A1- 2018 246 494**

## Description

### Domaine technique

La présente invention se rapporte au domaine de l'estimation de l'état d'usure d'un outil coupant pendant l'usinage.

### Etat de la technique antérieure

Dans l'industrie et en particulier dans l'industrie aéronautique, on utilise des machines d'usinage spécialisées (aléseuses-perceuses, fraiseuses) à commande numérique permettant d'usiner des formes complexes et très précises éventuellement sans démontage de la pièce et en fonction de la définition numérique de cette pièce.

Ces machines d'usinage sont équipées de différents outils coupants (forets, fraises) dont l'état d'usure doit être contrôlé afin que l'usinage soit toujours réalisé avec la plus grande précision et qu'il réponde aux requis de tolérance et d'état de surface.

De manière générale, l'estimation de l'état d'usure d'un outil coupant est réalisée par des moyens directs en utilisant des outils de mesures comme par exemple, des loupes binoculaires, des profilomètres, des scanners tridimensionnels, des lasers, des caméras, etc. Les mesures réalisées par ce genre d'outils sont précises et répétables mais ont l'inconvénient d'avoir lieu hors du procédé d'usinage et nécessitent par conséquent, un temps d'arrêt non négligeable de fabrication.

Il existe des moyens de mesures indirectes consistant à réaliser une estimation d'un niveau d'usure d'un outil coupant en fonction d'un décompte du temps d'usinage à partir de la durée de vie prédéterminée de l'outil coupant. Toutefois, cette estimation est imprécise compte tenu du fait que l'évolution de l'usure est un phénomène variable qui dépend de beaucoup de facteurs. Par ailleurs, la durée de vie définie en amont de l'usinage est spécifiée selon un critère conservatif qui mène à un gaspillage d'outils coupants.

L'objet de la présente invention est par conséquent, de proposer un système ou un procédé indirect automatisant l'estimation de l'état d'usure d'un outil coupant pendant l'usinage présentant une grande précision, évitant ainsi le gaspillage d'outils coupants tout en ne nécessitant aucun temps d'arrêt de l'usinage.

Le document EP-A-3 001 265 divulgue un système d'estimation de l'état de la technique.

### Présentation de l'invention

La présente invention concerne un système d'estimation de l'état d'usure d'un outil coupant monté sur une machine d'usinage, ledit système comporte :

- un module d'acquisition configuré pour acquérir pendant une durée déterminée d'usinage, des valeurs d'un signal opératoire propre à l'outil coupant monté sur la machine d'usinage, et
- un microprocesseur configuré pour :

  - calculer des valeurs courantes d'un ensemble d'indicateurs d'usure à partir desdites valeurs du signal opératoire, et
  - déterminer l'état d'usure de l'outil coupant en fonction desdites valeurs courantes de l'ensemble d'indicateurs en utilisant un modèle d'usure prédéterminé modélisant l'état d'usure de l'outil coupant en fonction des valeurs d'apprentissage dudit ensemble d'indicateurs d'usure, et caractérisé en ce que lors d'une phase d'apprentissage :

    - le module d'acquisition est configuré pour acquérir pendant un usinage d'apprentissage, un ensemble de valeurs du signal opératoire d'apprentissage propre à l'outil coupant ainsi qu'un ensemble de mesures d'usures d'apprentissage correspondantes audit outil coupant, et
    - le microprocesseur est configuré pour :

      - calculer une suite de valeurs d'apprentissage dudit ensemble d'indicateurs d'usure à partir d'une première partie dudit ensemble de valeurs du signal opératoire d'apprentissage,
      - construire ledit modèle d'usure en appliquant une technique de régression configurée pour calibrer ladite suite de valeurs d'apprentissage de l'ensemble d'indicateurs d'usure sur une première partie de l'ensemble de mesures d'usures d'apprentissage correspondante à ladite première partie de l'ensemble de valeurs du signal opératoire d'apprentissage, et
      - valider ledit modèle d'usure en utilisant une deuxième partie de l'ensemble de valeurs du signal opératoire d'apprentissage.

Ce système permet une estimation précise, rapide, répétable et en temps réel du niveau de l'usure d'un outil coupant pendant l'usinage. Ainsi, ce système ne nécessite aucun arrêt de l'usinage et permet d'éviter le gaspillage d'outils coupants.

Ainsi, le système permet de construire de manière simple et précise un modèle d'usure pouvant estimer le niveau d'usure en accord avec l'usure réelle de l'outil coupant.

Avantageusement, lors de la validation du modèle d'usure, le microprocesseur est configuré pour :

- utiliser le modèle d'usure pour estimer des valeurs d'usure de test de l'outil coupant à partir de ladite deuxième partie de l'ensemble de valeurs du signal opératoire d'apprentissage,

- comparer les valeurs d'usure de test estimées par le modèle d'usure à une deuxième partie de l'ensemble de mesures d'usures d'apprentissage correspondante à ladite deuxième partie de l'ensemble de valeurs du signal opératoire d'apprentissage, et

- valider ledit modèle d'usure lorsque la différence entre les valeurs d'usures de test et la deuxième partie correspondante de l'ensemble de mesures d'usures d'apprentissage ne dépasse pas un seuil prédéterminé.

Ainsi, le modèle d'usure peut être validé selon le seuil d'estimation souhaité.

Avantageusement, le signal opératoire propre à l'outil coupant est un signal issu de la machine d'usinage pendant l'usinage, ledit signal étant sélectionné parmi les signaux suivants : puissance, couple, et intensité de courant.

Ces signaux proviennent des capteurs qui sont déjà présents au niveau de la broche de la machine d'usinage et ainsi il n'est pas nécessaire d'installer de nouveaux capteurs.

En variante, le signal opératoire est un signal de vibration issu de la machine d'usinage pendant l'usinage.

Le signal de vibration donne une indication précise de l'usure de l'outil coupant mais nécessite éventuellement l'installation d'un capteur de vibration au niveau de la broche de la machine d'usinage.

Avantageusement, ledit ensemble d'indicateurs d'usure comporte :

- un premier indicateur correspondant à la durée déterminée d'usinage,

- un deuxième indicateur correspondant à un écart-type du signal opératoire

- un troisième indicateur correspondant à un coefficient d'acuité du signal opératoire,

- un quatrième indicateur correspondant à un coefficient d'asymétrie du signal opératoire.

Ces indicateurs présentent une corrélation optimale avec le niveau d'usure de l'outil coupant.

Selon un mode de réalisation de l'invention, le système comporte un dispositif de mesure utilisé pour réaliser l'ensemble de mesures d'usure d'apprentissage de l'outil coupant correspondant à l'ensemble de valeurs du signal opératoire d'apprentissage.

Avantageusement, le dispositif de mesure est un porte outil instrumenté comportant un ensemble de capteurs configurés pour mesurer l'usure pendant l'usinage lors de la phase d'apprentissage.

Selon un autre mode de réalisation de l'invention, le dispositif de mesure est un dispositif optique adapté pour mesurer l'usure de l'outil coupant à la fin de chaque parcours d'usinage lors de la phase d'apprentissage.

Avantageusement, le microprocesseur est configuré pour accéder à des données prédéterminées de mise au point comportant des paramètres de conditions de coupe ainsi qu'un plan d'expérience défini à partir desdits paramètres de conditions de coupe.

Avantageusement, les paramètres de conditions de coupe comportent des profondeurs de passe, des largeurs de passe, des vitesses d'avance, des vitesses de rotation critiques, des rayons de courbures et des schémas de coupe.

La présente invention vise également une machine d'usinage comportant le système d'estimation de l'état d'usure d'un outil coupant selon l'une quelconque des caractéristiques précédentes.

La présente invention vise aussi un procédé d'estimation de l'état d'usure d'un outil coupant monté sur une machine d'usinage, ledit procédé comporte les étapes suivantes :

- acquérir pendant une durée déterminée d'usinage, des valeurs d'un signal opératoire propre à l'outil coupant monté sur la machine d'usinage,

- calculer des valeurs courantes d'un ensemble d'indicateurs d'usure à partir desdites valeurs du signal opératoire, et

- déterminer l'état d'usure de l'outil coupant en fonction desdites valeurs courantes de l'ensemble d'indicateurs en utilisant un modèle d'usure prédéterminé modélisant l'état d'usure de l'outil coupant en fonction de valeurs d'apprentissage dudit ensemble d'indicateurs d'usure, et caractérisé en ce que lors d'une phase d'apprentissage, ledit procédé comporte les étapes suivantes :

- acquérir pendant un usinage d'apprentissage, un ensemble de valeurs du signal opératoire d'apprentissage propre à l'outil coupant ainsi qu'un ensemble de mesures d'usures d'apprentissage correspondantes audit outil coupant,

- calculer une suite de valeurs d'apprentissage dudit ensemble d'indicateurs d'usure à partir d'une première partie dudit ensemble de valeurs du signal opératoire d'apprentissage,

- construire ledit modèle d'usure en appliquant une technique de régression configurée pour calibrer ladite suite de valeurs d'apprentissage de l'ensemble d'indicateurs d'usure sur une première partie de l'ensemble de mesures d'usures d'apprentissage correspondante à ladite première partie de l'ensemble de valeurs du signal opératoire d'apprentissage, et

- valider ledit modèle d'usure en utilisant une deuxième partie de l'ensemble de valeurs du signal opératoire d'apprentissage.

## Brève description des figures

D'autres particularités et avantages du dispositif et du procédé selon l'invention ressortiront mieux à la lecture de la description faite ci-après, à titre indicatif mais non limitatif, en référence aux dessins annexés sur lesquels :

- la Fig. 1 illustre de manière schématique un système d'estimation de l'état d'usure d'un outil coupant, selon un mode de réalisation de l'invention ;
- la Fig. 2 est un organigramme illustrant de manière schématique la réalisation du modèle d'usure lors d'une phase d'apprentissage, selon un mode de réalisation préféré de l'invention ;
- les Figs. 3A et 3B sont des graphes illustrant des techniques d'optimisation d'un algorithme de régression, selon un mode de réalisation de l'invention ;
- la Fig. 4 est un graphe illustrant la comparaison entre des valeurs d'usure estimées et des mesures réelles d'usures, selon un mode de réalisation de l'invention ; et
- la Fig. 5 est un organigramme illustrant de manière schématique un procédé d'estimation de l'état d'usure d'un outil coupant, selon un mode de réalisation préféré de l'invention.

## Description des modes de réalisation

Le principe de l'invention consiste à estimer l'état d'usure d'un outil coupant pendant l'usinage en interprétant les signaux résultants de la machine d'usinage.

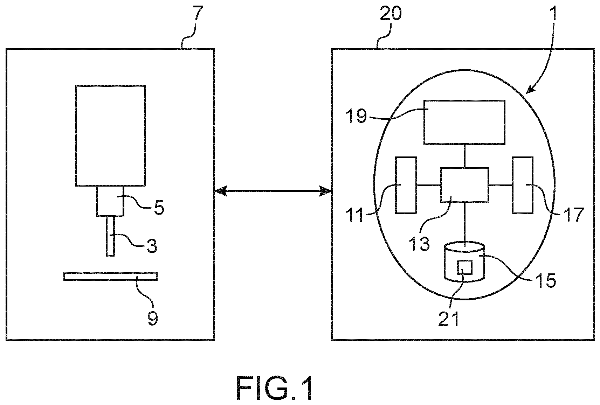

La Fig. 1 illustre de manière schématique un système d'estimation 1 de l'état d'usure d'un outil coupant 3, selon un mode de réalisation de l'invention.

L'outil coupant 3 est monté sur une broche 5 de la machine d'usinage 7 à commande numérique permettant d'usiner des formes programmées sur une pièce 9 à usiner. En général, la machine d'usinage 7 est équipée d'un magasin dans lequel sont disposés différents outils coupants (aléseuses-perceuses, fraiseuses, etc.). Ainsi, le terme 'outil coupant' désigne n'importe quel type d'outil coupant pouvant être monté sur la machine d'usinage 7.

Conformément à l'invention, le système d'estimation 1 comporte un module d'acquisition 11, un microprocesseur 13, une unité de stockage 15, une interface d'entrée 17 (par exemple, un clavier) et une interface de sortie 19 (par exemple un écran). Avantageusement tous ces éléments matériels du système d'estimation 1 sont déjà intégrés dans un dispositif de commande 20 de la machine d'usinage 7.

Le module d'acquisition 11 est configuré pour acquérir à des instants successifs et pendant une durée déterminée d'usinage, des valeurs d'un signal opératoire propre à l'outil coupant 3 monté sur la machine d'usinage 7.

Le signal opératoire propre à l'outil coupant 3 est un signal issu de la machine d'usinage 7 pendant l'opération d'usinage. Avantageusement, ce signal opératoire est un signal qui provient de capteurs déjà présents au niveau de la broche 5 de la machine d'usinage 7. En particulier, le signal opératoire peut être un signal de puissance électrique de la broche 5 de la machine d'usinage 7, un signal de couple, ou un signal d'intensité de courant électrique circulant dans la machine d'usinage. En effet, plus l'outil coupant est usé, plus la machine d'usure va forcer entraînant ainsi une augmentation du couple, du débit de courant, de consommation électrique et de vibration, etc.

D'autres types de signaux opératoires issus de la machine d'usinage 7 peuvent être utilisés comme par exemple, un signal de vibration. Dans ce cas, un capteur de vibration est installé au niveau de la broche 5 de la machine d'usinage 7 si cette dernière n'est pas déjà équipée d'un tel capteur.

Par ailleurs, le microprocesseur 13 est configuré pour traiter les valeurs du signal opératoire propre à l'outil coupant 3 acquis depuis la machine d'usinage 7. Plus particulièrement, le microprocesseur 13 est configuré pour calculer des valeurs caractéristiques courantes d'un ensemble d'indicateurs d'usure à partir des valeurs du signal opératoire et pour déterminer ensuite l'état d'usure de l'outil coupant 3 en fonction de ces valeurs caractéristiques courantes de l'ensemble d'indicateurs en utilisant un modèle 21 d'usure prédéterminé enregistré dans l'unité de stockage 15. Le modèle 21 d'usure est préalablement réalisé lors d'une phase d'apprentissage pour modéliser l'état d'usure de l'outil coupant 3 en fonction de valeurs d'apprentissage de l'ensemble d'indicateurs d'usure.

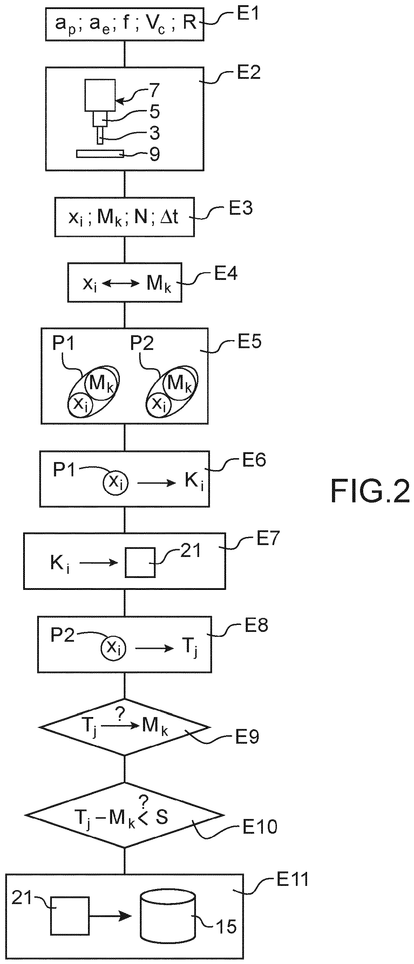

La Fig. 2 est un organigramme illustrant de manière schématique la réalisation du modèle d'usure lors d'une phase d'apprentissage, selon un mode de réalisation de l'invention.

L'organigramme décrit les étapes d'apprentissage réalisées pendant des opérations d'usinage d'un outil coupant 3 d'intérêt pour la construction d'un modèle 21 d'usure relatif à cet outil 3. Bien entendu, on construit un modèle 21 d'usure pour chaque type d'outil coupant.

Les étapes E1 et E2 concernent la préparation d'un programme de conditions de coupe et d'usinage pour l'outil de coupe 3 sélectionné et l'installation de cet outil 3.

L'étape E1 concerne la mise au point d'un programme éprouvette de données prédéterminées comportant des paramètres de conditions de coupe de l'outil 3 et de conditions d'usinage de cet outil 3. En effet, à partir d'une base de données relative à l'outil coupant 3, on télécharge les paramètres de conditions de coupe de cet outil 3 ainsi que les paramètres des conditions d'usinage. Ces paramètres comportent des profondeurs de passe 'ap' (c'est-à-dire, la gorge qui doit être créée dans la matière de la pièce 9 par l'outil de coupe 3) ; des largeurs de passe 'ae' (c'est-à-dire, la largeur de la gorge) ; des vitesses d'avance 'f' en mm/min (c'est-à-dire, la distance parcourue par l'outil pendant une minute d'enlevant de la matière) ; des vitesses de rotation critiques 'Vc' entre l'outil coupant 3 et la matière ; et des rayons de courbures 'R' et des schémas de coupe. En général, on définit pour chaque outil coupant 3 et pour chacun des paramètres de conditions de coupe un intervalle de fonctionnement compris entre une valeur minimale et une valeur maximale.

En outre, on définit un plan d'expérience sur ces paramètres de conditions de coupe et d'usinage en prenant au moins les valeurs minimales et maximales de chacun de ces paramètres. En définissant un ensemble de configurations d'usinage, le plan d'expérience vise à s'assurer que l'on utilise l'outil coupant 3 dans ses conditions usuelles, c'est-à-dire dans une plage de valeur cohérente de chacun de ces paramètres.

L'étape E2 concerne le choix et l'installation de l'outil coupant 3 d'intérêt utilisé pendant l'essai de mise au point (i.e. la phase d'apprentissage). Ainsi, on positionne l'outil coupant 3 sélectionné sur son porte outil, on positionne le porte outil sur la broche 5 de la machine d'usinage 7 dédiée à l'essai de mise au point et on positionne la pièce 9 à couper. En outre, on télécharge le programme de mise au point préalablement établi. Ce programme va permettre à l'outil coupant 3 de visiter l'ensemble de configurations prédéfinies dans le plan d'expérience.

L'étape E3 concerne le début d'usinage (fraisage, perçage, tournage, etc.) et dès le début de l'usinage, on lance l'acquisition de valeurs $x_i$ du signal opératoire d'apprentissage issues de la machine d'usinage 7.

En effet, le module d'acquisition 11 est configuré pour acquérir à intervalles de temps prédéterminés (par exemple, à intervalles réguliers de quelques minutes), un ensemble de valeurs $x_i$ du signal opératoire d'apprentissage propre à l'outil coupant 3. A titre d'exemple, le signal opératoire est la puissance de la broche 5. Avantageusement, l'acquisition est réalisée selon un échantillonnage N présentant une fréquence supérieure ou égale à 1 Hz. Par exemple, pour une fréquence de 100 Hz, on acquiert 100 valeurs $x_1, x_2, \dots x_{100}$ du signal opératoire par seconde. L'ensemble de valeurs $x_i$ du signal opératoire d'apprentissage est enregistré dans l'unité de stockage 15. On enregistre également la durée $\Delta t$ pendant laquelle l'outil coupant 3 a usiné. Cette durée est égale à la somme des intervalles de temps prédéterminés.

On réalise également une acquisition d'un ensemble de mesures d'usures d'apprentissage $M_k$ correspondant à l'ensemble de valeurs $x_i$ du signal opératoire d'apprentissage du même outil coupant 3.

Selon un premier mode de réalisation, le système d'estimation 1 comporte un dispositif de mesure (non représenté) utilisé pour acquérir de manière automatique l'ensemble de mesures d'usure d'apprentissage $M_k$ de l'outil coupant 3 correspondant à l'ensemble de valeurs du signal opératoire d'apprentissage. Chaque mesure d'usure correspond par exemple, à la moyenne des valeurs maximales en mm de l'usure des arrêtes ou flancs de l'outil coupant 3.

Avantageusement, le dispositif de mesure est intégré à la machine d'usinage sous la forme d'un porte outil instrumenté comportant un ensemble de capteurs configurés pour mesurer l'usure pendant l'usinage lors de la phase d'apprentissage. Dans ce cas, le module d'acquisition 11 récupère automatiquement l'ensemble de mesures d'usures d'apprentissage $M_k$.

Selon un deuxième mode de réalisation, le dispositif de mesure est un dispositif non intégré dans la machine d'usinage 7 et peut être un outil optique de type loupe binoculaire, caméra ou un outil de mesure de type profilomètre, scanner tridimensionnel, etc. Ce dispositif de mesure est utilisé pour mesurer directement l'usure de l'outil coupant 3 à la fin de chaque parcours d'usinage du plan d'expérience défini pour l'apprentissage.

Aux étapes E4-E7, le microprocesseur 13 est configuré pour construire le modèle 21 d'usure.

Plus particulièrement, à l'étape E4 le microprocesseur 13 est configuré pour nettoyer les données en supprimant par exemple, les données incohérentes. En outre, le microprocesseur 13 est configuré pour mettre en contexte l'ensemble de mesures d'usures d'apprentissage $M_k$ avec l'ensemble de valeurs $x_i$ du signal opératoire d'apprentissage issu de la machine d'usinage 7.

A l'étape E5, le microprocesseur 13 est configuré pour subdiviser l'ensemble de valeurs $x_i$ du signal opératoire d'apprentissage ainsi que l'ensemble de mesures d'usures d'apprentissage $M_k$ correspondant en des première P1 et deuxième P2 parties. La première partie P1 (par exemple de l'ordre de 70%) est utilisée pour calibrer le modèle 21 d'usure tandis que la deuxième partie P2 (par exemple, le 30% restante) est utilisée pour tester le modèle 21.

A l'étape E6 le microprocesseur 13 utilise la première partie P1 de l'ensemble de valeurs $x_i$ du signal opératoire d'apprentissage pour calculer une suite de valeurs d'apprentissage relative à l'ensemble d'indicateurs d'usure. Cet ensemble d'indicateurs d'usure comporte un premier indicateur $K_1$ correspondant à la durée déterminée d'usinage, un deuxième indicateur $K_2$ correspondant à un écart-type du signal opératoire, un troisième indicateur $K_3$ correspondant à un coefficient d'acuité (ou Kurtosis) du signal opératoire, et un quatrième indicateur $K_4$ correspondant à un coefficient d'asymétrie (ou Skewness) du signal opératoire. Ces indicateurs visent à transformer les valeurs du signal opératoire sur un intervalle de temps prédéterminé en une seule valeur représentative du signal opératoire sur cet intervalle. L'intervalle de temps prédéterminé peut être de quelques minutes, par exemple cinq minutes.

Le premier indicateur $K_1$ est tout simplement la durée $\Delta t$ d'usinage enregistrée lors de l'acquisition à l'étape E3 de l'ensemble de valeurs $x_i$ du signal opératoire d'apprentissage. Ainsi, ce premier indicateur $K_1$ indique le temps total que l'outil coupant 3 a passé dans la matière :

$$K_1 = \Delta t \quad (1)$$

Le deuxième indicateur $K_2$ correspondant à l'écart-type $\sigma$ du signal opératoire est défini en fonction des valeurs $x_i$ du signal opératoire, de l'échantillonnage N qui représente le nombre d'acquisition par seconde et de la moyenne $\bar{x}$ de ces N valeurs $x_i$. Le deuxième indicateur $K_2$ (i.e. l'écart-type $\sigma$) est ainsi défini de la manière suivante :

$$K_2 = \sigma = \sqrt{\frac{1}{N} \sum_{i=1}^{N}(x_i - \bar{x})^2} \quad (2)$$

Le troisième indicateur $K_3$ est un coefficient d'acuité K du signal opératoire défini en fonction de l'écart-type $\sigma$ (i.e. le deuxième indicateur $K_2$) en plus des valeurs $x_i$ du signal opératoire, de l'échantillonnage N et de la moyenne $\bar{x}$. Le troisième indicateur $K_3$ (i.e. le coefficient d'acuité K) est ainsi défini de la manière suivante :

$$K_3 = K = \frac{1}{N} \sum_{i=1}^{N} \frac{(x_i - \bar{x})^4}{\sigma^4} \quad (3)$$

Le quatrième indicateur $K_4$ est un coefficient d'asymétrie Sk du signal opératoire défini en fonction des mêmes variables que le troisième indicateur $K_3$ de la manière suivante :

$$K_4 = Sk = \frac{1}{N} \sum_{i=1}^{N} \frac{(x_i - \bar{x})^3}{\sigma^3} \quad (4)$$

A l'étape E7 le microprocesseur 13 est configuré pour construire le modèle 21 d'usure en appliquant par exemple, une technique de régression sur l'ensemble des indicateurs $K_1$-$K_4$. En effet, la technique de régression est utilisée pour calibrer la suite de valeurs d'apprentissage de l'ensemble d'indicateurs $K_1$-$K_4$ d'usure sur la première partie P1 de l'ensemble de mesures d'usures d'apprentissage $M_k$ correspondante à la première partie P1 de l'ensemble de valeurs $x_i$ du signal opératoire d'apprentissage.

Différents algorithmes de régression peuvent être utilisés comme par exemple, les régressions linéaires utilisant des pénalisations du type Ridge ou Lasso ou les régressions à bases d'arbres de décisions du type Xgboost, etc. On peut utiliser des règles standards et/ou des méthodes d'optimisation d'hyper-paramètres connus pour l'homme du métier pour calibrer les algorithmes de régression.

A titre d'exemple non limitatif, l'usure peut être exprimée comme une superposition de différents indicateurs $K_i$ affectés de coefficients de pondération $\alpha_i$ générés par l'algorithme de régression. Ainsi, l'usure estimée peut être exprimée de la manière suivante :

$$U = \sum_{i=1}^{4} K_i \alpha_i \quad (5)$$

On notera que l'estimation donnée par la formule (5) ci-dessus n'est qu'un exemple spécifique à certains types d'algorithmes de régression.

Par ailleurs, afin d'optimiser l'algorithme de régression selon la précision recherchée on peut ajuster (de manière connue pour l'homme du métier) les hyper paramètres propres à l'algorithme. Par exemple, chaque coefficient de pondération $\alpha_i$ associé à chaque indicateur $K_i$ de la formule (5) est généré par des hyper paramètres.

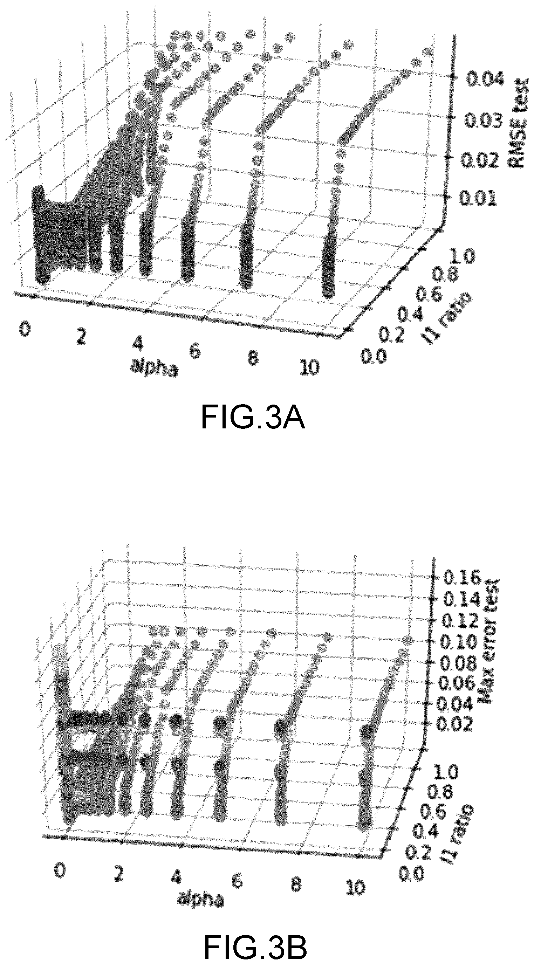

En effet, les Figs. 3A et 3B sont des graphes illustrant des techniques d'optimisation de l'algorithme de régression. Plus particulièrement, la Fig. 3A illustre les variations d'une erreur maximale 'Max error' en fonction des valeurs des hyper-paramètres 'alpha' et 'L1 ratio' de l'algorithme de régression. La Fig. 3B illustre les variations d'une erreur moyenne de prédiction 'RMSE' en fonction des valeurs des hyper-paramètres 'alpha' et 'L1 ratio' de l'algorithme de régression.

L'erreur maximale 'Max error' et l'erreur moyenne 'RMSE' sont utilisées comme des métriques de performances, le but étant de faire tendre ces métriques vers zéro afin d'obtenir la meilleure précision possible. Autrement dit, on cherche le couple (alpha, L1 ratio) qui minimise ces erreurs 'Max error' et 'RMSE' pour chaque point (i.e. pour chaque indicateur $K_i$).

Aux étapes E8-E10 le microprocesseur 13 est configuré pour valider le modèle 21 d'usure à l'aide d'un test de validation en utilisant une deuxième partie de l'ensemble de signaux opératoires d'apprentissage.

Plus particulièrement, à l'étape E8 le microprocesseur est configuré pour tester le modèle 21 d'usure construit précédemment en utilisant la deuxième partie P2 de l'ensemble des valeurs $x_i$ du signal opératoire d'apprentissage afin d'estimer des valeurs d'usure de test $T_j$ de l'outil coupant 3.

A l'étape E9 le microprocesseur 13 est configuré pour comparer les valeurs d'usure de test $T_j$ estimées par le modèle 21 d'usure à la deuxième partie P2 de l'ensemble de mesures réelles d'usures d'apprentissage $M_k$ correspondante à la deuxième partie P2 de l'ensemble des valeurs $x_i$ du signal opératoire d'apprentissage.

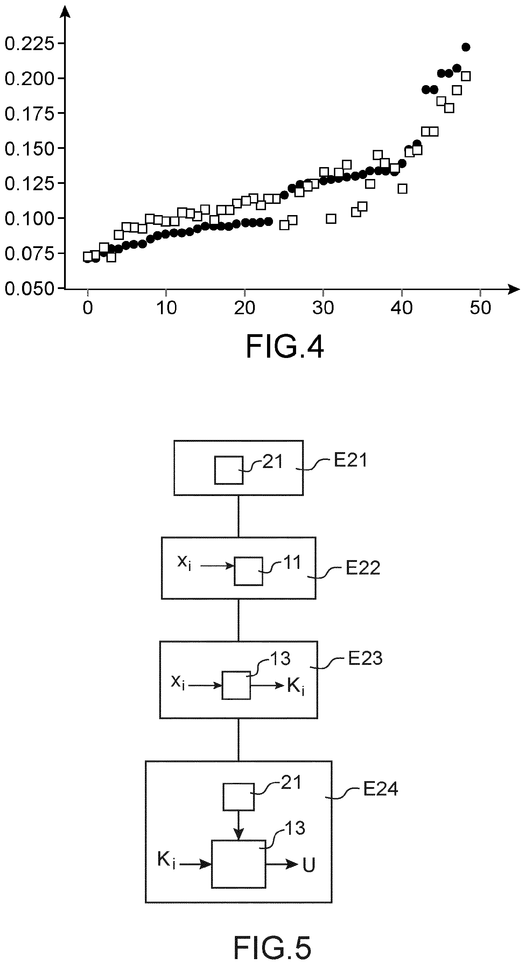

A titre d'exemple, la Fig. 4 est un graphe illustrant la comparaison entre les valeurs d'usure $T_j$ estimées et les mesures réelles $M_k$ d'usures.

Selon cet exemple, les valeurs d'usure $T_j$ estimées sont évaluées par un modèle 21 d'usure construit en utilisant un algorithme de régression linéaire. Ce graphe a pour ordonné l'usure en mm et pour abscisse le nombre d'usinage. Les points représentent des mesures réelles $M_k$ de l'usure tandis que les carrés représentent les valeurs d'usure $T_j$ estimée par le modèle 21 d'usure. Ce graphe montre une assez bonne corrélation entre les valeurs réelles et les valeurs estimées.

A l'étape E10 le microprocesseur 13 est configuré pour valider le modèle 21 d'usure lorsque la différence entre les valeurs d'usure $T_j$ de test et la deuxième partie P2 correspondante de l'ensemble de mesures réelles d'usures d'apprentissage $M_k$ ne dépasse pas un seuil S prédéterminé. Le seuil S peut être déterminé selon la précision désirée de l'estimation d'usure et le type d'opération. De manière générale, on considère qu'une erreur d'estimation de l'ordre de 10% est acceptable.

A l'étape E11 le modèle 21 d'usure est enregistré dans l'unité de stockage 15 et peut ensuite être utilisé comme un modèle d'usure 21 pour estimer en temps réel et de manière automatique l'usure d'un outil coupant 3 en opération d'usinage. On notera qu'on enregistre dans l'unité de stockage 15 un modèle 21 d'usure pour chaque type d'outil de coupe.

La Fig. 5 est un organigramme illustrant de manière schématique un procédé d'estimation de l'état d'usure d'un outil coupant, selon un mode de réalisation préféré de l'invention.

A l'étape E21 on télécharge le modèle 21 d'usure développé pour le type d'outil coupant 3 d'intérêt qui est monté sur la broche 5 de la machine d'usinage 7.

A l'étape E22, dès le début de l'usinage, le module d'acquisition 11 est configuré pour acquérir de manière régulière à des instants successifs et pendant une durée déterminée d'usinage, les valeurs $x_i$ du signal opératoire (par exemple, la puissance de la broche) propre à l'outil coupant 3 d'intérêt.

A l'étape E23, le microprocesseur 13 est configuré pour calculer les valeurs caractéristiques courantes de l'ensemble d'indicateurs $K_1$-$K_4$, définis par les formules (1)-(4), à partir des valeurs $x_i$ du signal opératoire d'usure.

A l'étape E24, le microprocesseur 13 est configuré pour utiliser le modèle 21 d'usure téléchargé à l'étape E21 pour déterminer l'état d'usure U de l'outil coupant 3 en fonction des valeurs caractéristiques courantes de l'ensemble d'indicateurs $K_1$-$K_4$. Le résultat U de l'estimation peut être affiché sur l'interface de sortie 19 (par exemple, l'écran de la machine d'usure). La régularité de l'estimation de l'état d'usure peut être prédéfinie en fonction du type d'usinage. Par exemple, le microprocesseur 13 peut être configuré pour calculer dix estimations pour chaque séquence de fraisage.

Ainsi, le système et procédé d'estimation selon l'invention permettent de réaliser une mesure indirecte du niveau d'usure d'un outil de coupe d'intérêt pendant l'usinage et permet de prévenir en temps réel d'une usure prématurée. L'invention permet également de réaliser une gestion optimale de la durée de vie de l'outil coupant. En outre, le système d'estimation consomme très peu de calcul et nécessite très peu de matériel additionnel facilitant son intégration dans toutes sortes de machines d'usures utilisées dans l'industrie.

## Revendications

1. Système d'estimation de l'état d'usure d'un outil coupant monté sur une machine d'usinage, ledit système (1) comporte :

    - un module d'acquisition (11) configuré pour acquérir pendant une durée déterminée d'usinage, des valeurs d'un signal opératoire propre à l'outil coupant (3) monté sur la machine d'usinage (7), et
    - un microprocesseur (13) configuré pour :

        - calculer des valeurs courantes d'un ensemble d'indicateurs d'usure à partir desdites valeurs du signal opératoire, et
        - déterminer l'état d'usure de l'outil coupant (3) en fonction desdites valeurs courantes de l'ensemble d'indicateurs en utilisant un modèle (21) d'usure prédéterminé modélisant l'état d'usure de l'outil coupant en fonction des valeurs d'apprentissage dudit ensemble d'indicateurs d'usure, et **caractérisé en ce que** lors d'une phase d'apprentissage :

            - le module d'acquisition (11) est configuré pour acquérir pendant un usinage d'apprentissage, un ensemble de valeurs du signal opératoire d'apprentissage propre à l'outil coupant ainsi qu'un ensemble de mesures d'usures d'apprentissage correspondantes audit outil coupant, et
            - le microprocesseur (13) est configuré pour :

                - calculer une suite de valeurs d'apprentissage dudit ensemble d'indicateurs d'usure à partir d'une première partie (P1) dudit ensemble de valeurs du signal opératoire d'apprentissage,
                - construire ledit modèle (21) d'usure en appliquant une technique de régression configurée pour calibrer ladite suite de valeurs d'apprentissage de l'ensemble d'indicateurs d'usure sur une première partie (P1) de l'ensemble de mesures d'usures d'apprentissage correspondante à ladite première partie (P1) de l'ensemble de valeurs du signal opératoire d'apprentissage, et
                - valider ledit modèle d'usure en utilisant une deuxième partie (P2) de l'ensemble de valeurs du signal opératoire d'apprentissage.

**2.** Système selon la revendication 1, **caractérisé en ce que** lors de la validation du modèle (21) d'usure, le microprocesseur (13) est configuré pour :

- utiliser le modèle (21) d'usure pour estimer des valeurs d'usure de test de l'outil coupant à partir de ladite deuxième partie (P2) de l'ensemble de valeurs du signal opératoire d'apprentissage,
- comparer les valeurs d'usure de test estimées par le modèle (21) d'usure à une deuxième partie (P2) de l'ensemble de mesures d'usures d'apprentissage correspondante à ladite deuxième partie (P2) de l'ensemble de valeurs du signal opératoire d'apprentissage, et
- valider ledit modèle (21) d'usure lorsque la différence entre les valeurs d'usure de test et la deuxième partie (P2) correspondante de l'ensemble de mesures d'usures d'apprentissage ne dépasse pas un seuil (S) prédéterminé.

**3.** Système selon l'une quelconque des revendications précédentes, **caractérisé en ce que** le signal opératoire propre à l'outil coupant (3) est un signal issu de la machine d'usinage (7) pendant l'usinage, ledit signal étant sélectionné parmi les signaux suivants : puissance, couple, et intensité de courant.

**4.** Système selon l'une quelconque des revendications 1 à 2, **caractérisé en ce que** le signal opératoire est un signal de vibration issu de la machine d'usinage (7) pendant l'usinage.

**5.** Système selon l'une quelconque des revendications précédentes, **caractérisé en ce que** ledit ensemble d'indicateurs d'usure comporte :

- un premier indicateur ($K_1$) correspondant à la durée déterminée d'usinage,
- un deuxième indicateur ($K_2$) correspondant à un écart-type du signal opératoire
- un troisième indicateur ($K_3$) correspondant à un coefficient d'acuité du signal opératoire,
- un quatrième indicateur ($K_4$) correspondant à un coefficient d'asymétrie du signal opératoire.

**6.** Système selon l'une quelconque des revendications précédentes, **caractérisé en ce qu'**il comporte un dispositif de mesure utilisé pour réaliser l'ensemble de mesures d'usure d'apprentissage de l'outil coupant (3) correspondant à l'ensemble de valeurs du signal opératoire d'apprentissage.

**7.** Système selon la revendication 6, **caractérisé en ce que** le dispositif de mesure est un porte-outil instrumenté comportant un ensemble de capteurs configurés pour mesurer l'usure pendant l'usinage lors de la phase d'apprentissage.

**8.** Système selon la revendication 6, **caractérisé en ce que** le dispositif de mesure est un dispositif optique adapté pour mesurer l'usure de l'outil coupant (3) à la fin de chaque parcours d'usinage lors de la phase d'apprentissage.

**9.** Système selon l'une quelconque des revendications précédentes, **caractérisé en ce que** le microprocesseur (13) est configuré pour accéder à des données prédéterminées de mise au point comportant des paramètres de conditions de coupe ainsi qu'un plan d'expérience défini à partir desdits paramètres de conditions de coupe.

**10.** Système selon la revendication 9, **caractérisé en ce que** les paramètres de conditions de coupe comportent des profondeurs de passe, des largeurs de passe, des vitesses d'avance, des vitesses de rotation critiques, des rayons de courbures et des schémas de coupe.

**11.** Machine d'usinage comportant le système d'estimation de l'état d'usure d'un outil coupant (3) selon l'une quelconque des revendications précédentes.

**12.** Procédé d'estimation de l'état d'usure d'un outil coupant (3) monté sur une machine d'usinage (7), ledit procédé comporte les étapes suivantes :

- acquérir pendant une durée déterminée d'usinage, des valeurs d'un signal opératoire propre à l'outil coupant (3) monté sur la machine d'usinage (7),
- calculer des valeurs courantes d'un ensemble d'indicateurs d'usure à partir desdites valeurs du signal opératoire, et
- déterminer l'état d'usure de l'outil coupant (3) en fonction desdites valeurs courantes de l'ensemble d'indicateurs en utilisant un modèle (21) d'usure prédéterminé modélisant l'état d'usure de l'outil coupant (3) en fonction de valeurs d'apprentissage dudit ensemble d'indicateurs d'usure, et **caractérisé en ce que** lors d'une phase d'apprentissage, ledit procédé comporte les étapes suivantes :

- acquérir pendant un usinage d'apprentissage, un ensemble de valeurs du signal opératoire d'apprentissage propre à l'outil coupant ainsi qu'un ensemble de mesures d'usures d'apprentissage correspondantes audit outil coupant,
- calculer une suite de valeurs d'apprentissage dudit ensemble d'indicateurs d'usure à partir d'une première partie (P1) dudit ensemble de valeurs du signal opératoire d'apprentissage,
- construire ledit modèle (21) d'usure en appliquant une technique de régression configurée pour calibrer ladite suite de valeurs d'apprentissage de l'ensemble d'indicateurs d'usure sur une première partie (P1) de l'ensemble de mesures d'usures d'apprentissage correspondante à ladite première partie (P1) de l'ensemble de valeurs du signal opératoire d'apprentissage, et
- valider ledit modèle d'usure en utilisant une deuxième partie (P2) de l'ensemble de valeurs du signal opératoire d'apprentissage.

**Patentansprüche**

1. System zur Abschätzung des Verschleißzustands eines Schneidwerkzeugs, das an einer Bearbeitungsmaschine angebracht ist, wobei das System (1) Folgendes aufweist:

- ein Erfassungsmodul (11), das dazu ausgebildet ist, während eines bestimmten Bearbeitungszeitraums Werte eines Betriebssignals zu erfassen, das dem Schneidwerkzeug (3) eigen ist, das an der Bearbeitungsmaschine (7) angebracht ist, und
- einen Mikroprozessor (13), der zu Folgendem ausgebildet ist:

- Berechnen von aktuellen Werte eines Satzes von Verschleißindikatoren anhand der Werte des Betriebssignals, und
- Bestimmen des Verschleißzustands des Schneidwerkzeugs (3) je nach den aktuellen Werten des Indikatorensatzes unter Verwendung eines vorbestimmten Verschleißmodells (21), das den Verschleißzustand des Schneidwerkzeugs je nach den Lernwerten des Satzes von Verschleißindikatoren modelliert, und **dadurch gekennzeichnet, dass** bei einer Lernphase:

- das Erfassungsmodul (11) dazu ausgebildet ist, während einer Lernbearbeitung einen Satz von Werten des Lernbetriebssignals, das dem Schneidwerkzeug eigen ist, sowie einen Satz von Lern-Verschleißmessungen, die dem Schneidwerkzeug entsprechen, zu erfassen, und
- der Mikroprozessor (13) zu Folgendem ausgebildet ist:

- Berechnen einer Folge von Lernwerten des Satzes von Verschleißindikatoren anhand eines ersten Abschnitts (P1) des Satzes von Werten des Lernbetriebssignals,
- Erstellen des Verschleißmodells (21) unter Anwendung einer Regressionstechnik, die dazu ausgebildet ist, die Folge von Lernwerten des Satzes von Verschleißindikatoren an einem ersten Abschnitt (P1) des Satzes von Lern-Verschleißmessungen zu kalibrieren, der dem ersten Abschnitt (P1) des Satzes von Werten des Lernbetriebssignals entspricht, und
- Validieren des Verschleißmodells unter Verwendung eines zweiten Abschnitts (P2) des Satzes von Werten des Lernbetriebssignals.

2. System nach Anspruch 1, **dadurch gekennzeichnet, dass** beim Validieren des Verschleißmodells (21) der Mikroprozessor (13) für Folgendes ausgebildet ist:

- Nutzen des Verschleißmodells (21) zur Schätzung von Testverschleißwerten des Schneidwerkzeugs anhand des zweiten Abschnitts (P2) des Satzes von Werten des Lernbetriebssignals,
- Vergleichen der Testverschleißwerte, die vom Verschleißmodell (21) geschätzt sind, mit einem zweiten Abschnitt (P2) des Satzes von Lern-Verschleißmessungen, der dem zweiten Abschnitt (P2) des Satzes von Werten des Lernbetriebssignals entspricht, und
- Validieren des Verschleißmodells (21), wenn die Differenz zwischen den Testverschleißwerten und dem entsprechenden zweiten Abschnitt (P2) des Satzes von Lern-Verschleißmessungen eine vorbestimmte Schwelle (S) nicht überschreitet.

3. System nach einem der vorhergehenden Ansprüche, **dadurch gekennzeichnet, dass** das Betriebssignal, das dem Schneidwerkzeug (3) eigen ist, ein Signal ist, das während der Bearbeitung von der Bearbeitungsmaschine (7) kommt, wobei das Signal aus den folgenden Signalen ausgewählt ist: Leistung, Drehmoment und Stromstärke.

4. System nach einem der Ansprüche 1 bis 2, **dadurch gekennzeichnet, dass** das Betriebssignal ein Vibrationssignal ist, das während der Bearbeitung von der Bearbeitungsmaschine (7) kommt.

5. System nach einem der vorhergehenden Ansprüche, **dadurch gekennzeichnet, dass** der Satz von Verschleißindikatoren Folgendes aufweist:

- einen ersten Indikator ($K_1$), der dem bestimmten Bearbeitungszeitraum entspricht,
- einen zweiten Indikator ($K_2$), der der Standardabweichung des Betriebssignals entspricht
- einen dritten Indikator ($K_3$), der einer Wölbung des Betriebssignals entspricht,
- einen vierten Indikator ($K_4$), der einer Schiefe des Betriebssignals entspricht.

6. System nach einem der vorhergehenden Ansprüche, **dadurch gekennzeichnet, dass** es eine Messvorrichtung aufweist, die dafür genutzt wird, den Satz von Lern-Verschleißmessungen des Schneidwerkzeugs (3) durchzuführen, der dem Satz von Werten des Lernbetriebssignals entspricht.

7. System nach Anspruch 6, **dadurch gekennzeichnet, dass** die Messvorrichtung ein instrumentierter Werkzeugträger ist, der einen Satz von Sensoren aufweist, die dazu ausgebildet sind, den Verschleiß während der Bearbeitung bei der Lernphase zu messen.

8. System nach Anspruch 6, **dadurch gekennzeichnet, dass** die Messvorrichtung eine optische Vorrichtung ist, die geeignet ist, den Verschleiß des Schneidwerkzeugs (3) am Ende jedes Bearbeitungsdurchlaufs bei der Lernphase zu messen.

9. System nach einem der vorhergehenden Ansprüche, **dadurch gekennzeichnet, dass** der Mikroprozessor (13) dazu ausgebildet ist, auf vorbestimmte Einfahrdaten zuzugreifen, die Schnittbedingungsparameter sowie eine Versuchsplanung, die anhand der Schnittbedingungsparameter festgelegt ist, umfassen.

10. System nach Anspruch 9, **dadurch gekennzeichnet, dass** die Schnittbedingungsparameter Durchlauftiefen, Durchlaufbreiten, Vorschubgeschwindigkeiten, kritische Drehzahlen, Krümmungsradien und Schnittschemata umfassen.

11. Bearbeitungsmaschine aufweisend das System zur Abschätzung des Verschleißzustands eines Schneidwerkzeugs (3) nach einem der vorhergehenden Ansprüche.

12. System zur Abschätzung des Verschleißzustands eines Schneidwerkzeugs (3), das an einer Bearbeitungsmaschine (7) angebracht ist, wobei das Verfahren die folgenden Schritte aufweist:

- Erfassen, während eines bestimmten Bearbeitungszeitraums, von Werten eines Betriebssignals, das dem Schneidwerkzeug (3) eigen ist, das an der Bearbeitungsmaschine (7) angebracht ist,
- Berechnen von aktuellen Werte eines Satzes von Verschleißindikatoren anhand der Werte des Betriebssignals, und
- Bestimmen des Verschleißzustands des Schneidwerkzeugs (3) je nach den aktuellen Werten des Indikatorensatzes unter Verwendung eines vorbestimmten Verschleißmodells (21), das den Verschleißzustand des Schneidwerkzeugs (3) je nach Lernwerten des Satzes von Verschleißindikatoren modelliert, und **dadurch gekennzeichnet, dass** bei einer Lernphase das Verfahren die folgenden Schritte aufweist:

- Erfassen, während einer Lernbearbeitung, eines Satzes von Werten des Lernbetriebssignals, das dem Schneidwerkzeug eigen ist, sowie eines Satzes von Lern-Verschleißmessungen, die dem Schneidwerkzeug entsprechen,
- Berechnen einer Folge von Lernwerten des Satzes von Verschleißindikatoren anhand eines ersten Abschnitts (P1) des Satzes von Werten des Lernbetriebssignals,
- Erstellen des Verschleißmodells (21) unter Anwendung einer Regressionstechnik, die dazu ausgebildet ist, die Folge von Lernwerten des Satzes von Verschleißindikatoren an einem ersten Abschnitt (P1) des Satzes von Lern-Verschleißmessungen zu kalibrieren, der dem ersten Abschnitt (P1) des Satzes von Werten des Lernbetriebssignals entspricht, und
- Validieren des Verschleißmodells unter Verwendung eines zweiten Abschnitts (P2) des Satzes von Werten des Lernbetriebssignals.

## Claims

1. System for estimating a state of wear of a cutting tool mounted on a machine tool, the system (1) comprising:

- an acquisition module (11) configured to acquire, over a determined duration of machining, values of an operating signal specific to the cutting tool (3) mounted on the machine tool (7), and
- a microprocessor (13) configured to:

- calculate current values of a set of wear indicators on a basis of said values of the operating signal, and
- determine the state of wear of the cutting tool (3) according to said current values of the set of wear indicators using a predetermined wear model (21) modeling the state of wear of the cutting tool according to training values for the set of wear indicators and characterizes in that during a training phase:

- the acquisition module (11) is configured to acquire, during a training machining operation, a set of values of the training operating signal specific to the cutting tool and a set of training wear measurements corresponding to said cutting tool; and
- the microprocessor (13) is configured to:

- calculate a series of training values for said set of wear indicators on a basis of a first portion (P1) of said set of values of the training operating signal,
- construct said wear model (21) by applying a regression technique configured to calibrate said series of training values for the set of wear indicators to a first portion (P1) of the set of training wear measurements corresponding to said first portion (P1) of the set of values of the training operating signal, and
- validate said wear model by using a second portion (P2) of the set of values of the training operating signal.

2. System according to of claim 1, **characterized in that**, during the validation of the wear model (21), the microprocessor (13) is configured to:

- use the wear model (21) to estimate test wear values for the cutting tool on a basis of said second portion (P2) of the set of values of the training operating signal,
- compare the test wear values estimated by the wear model (21) with a second portion (P2) of the set of training wear measurements corresponding to said second portion (P2) of the set of values of the training operating signal, and
- validate said wear model (21) when a difference between the test wear values and the corresponding second portion (P2) of the set of training wear measurements does not cross a predetermined threshold (S).

3. System according to one of the preceding claims, **characterized in that** the operating signal specific to the cutting tool (3) is a signal that comes from the machine tool (7) during machining, said signal being selected from the group consisting of the following signals: power, torque, and current intensity.

4. System according to one of the claims 1 or 2, **characterized in that** the operating signal is a vibration signal that comes from the machine tool (7) during machining.

5. System according to one of the preceding claims, **characterized in that** said set of wear indicators comprises:

- a first indicator ($K_1$) corresponding to the determined duration of machining,
- a second indicator ($K_2$) corresponding to a standard deviation of the operating signal,
- a third indicator ($K_3$) corresponding to a kurtosis of the operating signal, and
- a fourth indicator ($K_4$) corresponding to a skewness of the operating signal.

6. System according to one of the preceding claims, **characterized in that** it comprises a measurement device used to take the set of training wear measurements for the cutting tool (3) corresponding to the set of values of the training operating signal.

7. System according to claim 6, **characterized in that** the measurement device is an instrumented tool holder comprising a set of sensors configured to measure wear during machining in the training phase.

8. System according to claim 6, **characterized in that** the measurement device is an optical device for measuring the wear of the cutting tool (3) at an end of each machining pass in the training phase.

9. System according to one of the preceding claims, **characterized in that** the microprocessor (13) is configured to access predetermined tuning data comprising cutting condition parameters and an experimental plan defined on a basis of said cutting condition parameters.

10. System according to claim 9, **characterized in that** the cutting condition parameters comprise depths of pass, widths of pass, feed rates, critical rotational speeds, radii of curvature and cutting plans.

11. Machine tool comprising the system for estimating the state of wear of a cutting tool (3) according to one of the preceding claims.

12. Method for estimating state of wear of a cutting tool (3) mounted on a machine tool (7), said method comprising the following steps:

- acquiring, over a determined duration of machining, values of an operating signal specific to the cutting tool (3) mounted on the machine tool (7),
- calculating current values of a set of wear indicators on a basis of said values of the operating signal, and
- determining the state of wear of the cutting tool (3) according to said current values of the set of indicators using a predetermined wear model (21) modeling the state of wear of the cutting tool (3) according to training values for said set of wear indicators, and **characterized in that**

during a training machining operation, said method comprises the following steps:

- acquiring during a training machining operation, a set of values of the training operating signal specific to the cutting tool and a set of training wear measurements corresponding to said cutting tool,
- calculating a series of training values for said set of wear indicators on a basis of a first portion (P1) of said set of values of the training operating signal,
- constructing said wear model (21) by applying a regression technique configured to calibrate said series of training values for the set of wear indicators to a first portion (P1) of the set of training wear measurements corresponding to the first portion (P1) of the set of values of the training operating signal, and
- validating said wear model by using a second portion (P2) of the set of values of the training operating signal.

FIG.1

FIG.2

FIG.3A

FIG.3B

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3001265 A